(19) Europäisches Patentamt / European Patent Office / Office européen des brevets

(11) **EP 4 443 997 A1**

(12) **EUROPEAN PATENT APPLICATION**
published in accordance with Art. 153(4) EPC

(43) Date of publication:
**09.10.2024 Bulletin 2024/41**

(21) Application number: **21965969.5**

(22) Date of filing: **01.12.2021**

(51) International Patent Classification (IPC):
*H04W 68/00* (2009.01)   *H04W 68/02* (2009.01)

(52) Cooperative Patent Classification (CPC):
**H04W 68/00; H04W 68/02**

(86) International application number:
**PCT/CN2021/134688**

(87) International publication number:
**WO 2023/097532 (08.06.2023 Gazette 2023/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **LI, Yanhua**
**Beijing 100085 (CN)**

(74) Representative: **Dehns Germany Partnerschaft mbB**
**Theresienstraße 6-8**
**80333 München (DE)**

(54) **GROUP PAGING METHOD AND APPARATUS, COMMUNICATION DEVICE, AND STORAGE MEDIUM**

(57)     Embodiments of the present application provide a group paging method. The method is executed by a base station. The method comprises: sending mapping relationship information to a terminal, wherein the mapping relationship information to a terminal, wherein the mapping relationship information indicates a mapping relationship between information of a paging group and a paging group resource.

FIG. 2

## Description

## FIELD

The present disclosure relates to, but is not limited to, the technical field of wireless communication, and more particularly, to a method and apparatus for group paging, a communication device and a storage medium.

## BACKGROUND

Paging can be used to realize important functions of wireless communication. The function of the paging is to notify, by the base station, a paged terminal to respond to a network, according to the requirements of the network. The base station and the terminal will agree on a paging occasion (PO). The base station will send a paging message at the paging occasion, and the terminal will receive the paging message at a corresponding paging occasion.

In the related art, terminals are paged in a manner of group paging, and the network can send a paging message to page all terminals in a group, instead of sending a paging message separately for each terminal. After receiving the group paging message, the terminal determines whether it belongs to the paged group, if yes, the terminal responds to the group paging message, and if no, the terminal ignores the group paging message.

## SUMMARY

Embodiment of the present disclosure relates to the technical field of wireless communication, and more particularly, to a method and apparatus for group paging, a communication device and a storage medium.

According to a first aspect of embodiments of the present disclosure, there is provided a method for group paging, which is performed by a base station and includes: sending mapping relationship information to a terminal. The mapping relationship information indicates a mapping relationship between information of a paging group and a paging group resource.

In an embodiment, whether to send the mapping relationship information to the terminal is determined according to a number of paging groups allocated in a predetermined manner and a number of paging groups supported by the base station for the predetermined manner. The predetermined manner is a manner that a network allocates paging groups.

In an embodiment, determining whether to send the mapping relationship information to the terminal according to the number of paging groups allocated in the predetermined manner and the number of paging groups supported by the base station for the predetermined manner includes: determining to send the mapping relationship information to the terminal, in response to the number of paging groups allocated in the predetermined manner being greater than the number of paging groups supported by the base station for the predetermined manner; or determining not to send the mapping relationship information to the terminal, in response to the number of paging groups allocated in the predetermined manner being not greater than the number of paging groups supported by the base station for the predetermined manner.

In an embodiment, the method further includes: sending number information to the terminal. The number information indicates: the number of paging groups supported by the base station for the predetermined manner.

In an embodiment, sending the number information to the terminal includes: sending first number information to the terminal, or sending second number information to the terminal. The first number information carries a value of the number of paging groups supported by the base station for the predetermined manner. The second number information carries an indication which enables the terminal to determine the number of paging groups supported by the base station for the predetermined manner according to a number obtained in a target manner.

In an embodiment, the number of paging groups supported by the base station for the predetermined manner is a number determined according to a predetermined protocol or a total number of paging groups supported by the base station.

In an embodiment, the number information indicates that the base station supports the manner that the network allocates paging groups.

In an embodiment, the method further includes: establishing the mapping relationship between the information of the paging group and the paging group resource.

In an embodiment, establishing the mapping relationship between the information of the paging group and the paging group resource includes: establishing a mapping relationship between a single paging group and a resource set including at least one paging group resource; or establishing a mapping relationship between a group set including multiple paging groups and a resource set including at least one paging group resource.

According to a second aspect of embodiments of the present disclosure, there is provided a method for group paging, which is performed by a terminal and includes: receiving mapping relationship information sent by a base station. The mapping relationship information indicates a mapping relationship between information of a paging group and a paging group resource.

In an embodiment, the method further includes: receiving number information sent by the base station. The number information indicates: a number of paging groups supported by the base station for a predetermined manner; and the predetermined manner is a manner that a network allocates paging groups.

In an embodiment, receiving the number information sent by the base station includes: receiving first number information sent by the base station, or receiving second number information sent by the base station. The first number information carries a value of the number of paging groups supported by the base station for the predetermined manner. The second number information carries an indication which enables the terminal to determine the number of paging groups supported by the base station for the predetermined manner according to a number obtained in a target manner.

In an embodiment, the number of paging groups supported by the base station for the predetermined manner is a number determined according to a predetermined protocol or a total number of paging groups supported by the base station.

In an embodiment, the number information indicates that the base station supports the manner that the network allocates paging groups.

In an embodiment, the mapping relationship includes: a mapping relationship between a single paging group and a resource set including at least one paging group resource; or a mapping relationship between a group set including multiple paging groups and a resource set including at least one paging group resource.

In an embodiment, the method further includes: determining a paging group resource to be used by the terminal for paging according to a paging group to which the terminal belongs and the mapping relationship indicated by the mapping relationship information; or determining a paging group resource to be used by the terminal for paging according to a paging group to which the terminal belongs and a predetermined mapping relationship; or determining a paging group resource to be used by the terminal for paging according to a paging group to which the terminal belongs, the mapping relationship indicated by the mapping relationship information, and/or a predetermined mapping relationship. The predetermined mapping relationship is preconfigured.

In an embodiment, the predetermined mapping relationship includes: a mapping relationship between a paging group and a paging group resource determined according to an arrangement order of information of the paging group and an arrangement order of the paging group resource; or a mapping relationship between information of a paging group and a paging group resource determined according to a random selection manner.

In an embodiment, determining the paging group resource to be used by the terminal for paging according to the paging group to which the terminal belongs, the mapping relationship indicated by the mapping relationship information, and the predetermined mapping relationship includes: determining the paging group resource to be used by the terminal for paging according to the paging group to which the terminal belongs, the mapping relationship indicated by the mapping relationship information, and the predetermined mapping relationship, in response to a number of paging groups allocated in a predetermined manner being greater than the number of paging groups supported by the base station for the predetermined manner.

In an embodiment, the method further includes: performing a paging operation using a predetermined paging group resource, in response to a number of paging groups allocated in a predetermined manner being greater than the number of paging groups supported by the base station for the predetermined manner; or not using a group paging manner to perform a paging operation, in response to a number of paging groups allocated in a predetermined manner being greater than the number of paging groups supported by the base station for the predetermined manner. The predetermined paging group resource is preconfigured.

According to a third aspect of embodiments of the present disclosure, there is provided an apparatus for group paging, which includes a sending module. The sending module is configured to send mapping relationship information to a terminal. The mapping relationship information indicates a mapping relationship between information of a paging group and a paging group resource.

According to a fourth aspect of embodiments of the present disclosure, there is provided an apparatus for group paging. The method includes: a receiving module. The receiving module is configured to receive mapping relationship information sent by a base station. The mapping relationship information indicates a mapping relationship between information of a paging group and a paging group resource.

According to a fifth aspect of embodiments of the present disclosure, there is provided a communication device, which includes: a processor; and a memory for storing instructions executable by the processor. The processor is configured to perform the method according to any embodiment of the present disclosure when running the executable instructions.

According to a sixth aspect of embodiments of the present disclosure, there is provided a computer storage medium, having stored therein computer-executable programs that, when executed by a processor, cause the method according to any embodiment of the present disclosure to be performed.

In embodiments of the present disclosure, the mapping relationship information is sent to the terminal, and the mapping relationship information indicates the mapping relationship between the information of the paging group and the paging group resource. Here, since the mapping relationship information indicating the mapping relationship between the information of the paging group and the paging group resource can be sent to the terminal, the terminal is able to determine a paging group resource for a paging group according to the mapping relationship, so that the paging failure caused by the failure to determine the paging group resource for paging monitoring is reduced, and the reliability of the group paging is improved, as compared with the case where the paging group resource cannot be determined when the number of paging groups allocated by the network is inconsistent with the number of paging groups supported by the base station.

## BRIEF DESCRIPTION OF THE DRAWINGS

FIG. 1 is a schematic structural diagram showing a wireless communication system according to an illustrative embodiment.

FIG. 2 is a schematic flowchart showing a method for group paging according to an illustrative embodiment.

FIG. 3 is a schematic flowchart showing a method for group paging according to an illustrative embodiment.

FIG. 4 is a schematic flowchart showing a method for group paging according to an illustrative embodiment.

FIG. 5 is a schematic flowchart showing a method for group paging according to an illustrative embodiment.

FIG. 6 is a schematic flowchart showing a method for group paging according to an illustrative embodiment.

FIG. 7 is a schematic flowchart showing a method for group paging according to an illustrative embodiment.

FIG. 8 is a schematic flowchart showing a method for group paging according to an illustrative embodiment.

FIG. 9 is a schematic flowchart showing a method for group paging according to an illustrative embodiment.

FIG. 10 is a schematic flowchart showing a method for group paging according to an illustrative embodiment.

FIG. 11 is a schematic flowchart showing a method for group paging according to an illustrative embodiment.

FIG. 12 is a schematic flowchart showing a method for group paging according to an illustrative embodiment.

FIG. 13 is a schematic flowchart showing a method for group paging according to an illustrative embodiment.

FIG. 14 is a schematic diagram showing an apparatus for group paging according to an illustrative embodiment.

FIG. 15 is a schematic diagram showing an apparatus for group paging according to an illustrative embodiment.

FIG. 16 is a schematic structural diagram showing a terminal according to an illustrative embodiment.

FIG. 17 is a block diagram showing a base station according to an illustrative embodiment.

## DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with embodiments of the present disclosure. Instead, they are merely examples of apparatuses and methods consistent with some aspects of the present disclosure as recited in the appended claims.

Terms used in embodiments of the present disclosure are only for the purpose of describing specific embodiments, but should not be construed to limit embodiments of the present disclosure. As used in the embodiments of the present disclosure and the appended claims, "a/an", "said" and "the" in singular forms are intended to include plural forms, unless clearly indicated in the context otherwise. It should also be understood that, the term "and/or" used herein represents and contains any or all possible combinations of one or more associated items listed.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if' may be construed to mean "when" or "upon" or "in response to determining" depending on the context.

For the purposes of brevity and ease of understanding, terms "greater than" or "less than" are used herein for indicating size relationships. However, it may be understood for a person skilled in the art that the term "greater than" also covers a meaning of "greater than or equal to", the term "less than" also covers a meaning of "less than or equal to".

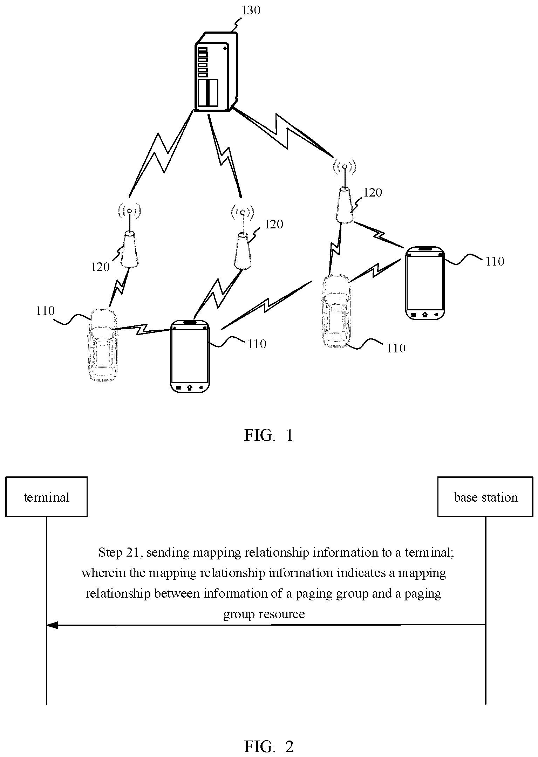

Referring to FIG. 1, FIG. 1 is a schematic structural diagram showing a wireless communication system according to an illustrative embodiment. As shown in FIG. 1, the wireless communication system is a communication system based on a mobile communication technology, and may include several user equipment 110 and several base stations 120.

The user equipment 110 may refer to a device that provides voice and/or data connectivity to a user. The user equipment 110 can communicate with one or more core networks via a radio access network (RAN). The user equipment 110 may be an Internet of Things user equipment, such as a sensor device, a mobile phone and a computer with an Internet of Things user equipment. For example, the user equipment 110 may be a fixed, portable, pocket-sized, handheld, built-in computer or vehicle-mounted apparatus, such as a station (STA), a subscriber unit, a subscriber station, a mobile station, a mobile, a remote station, an access point, a remote terminal, an access terminal, a user terminal, a user agent, a user device, or a user equipment. Alternatively, the user equipment 110 may be a device of an unmanned aerial vehicle. Alternatively, the user equipment 110 may be a vehicle-mounted device, for example, an electronic control unit with a wireless communication function, or a wireless user equipment externally connected with an electronic control unit. Alternatively, the user equipment 110 may be a roadside device, such as a street lamp, a signal lamp or other roadside devices with a wireless communication function.

The base station 120 may be a network device in the wireless communication system. The wireless communication system may be a 4th generation mobile communication (4G) system, also referred to as a long term evolution (LTE) system. Alternatively, the wireless communication system may be a 5G system, also referred to as a new radio (NR) system or a 5G NR system. Alternatively, the wireless communication system may be a next generation system of the 5G system. The access network in the 5G system may be referred to as a new generation-radio access network (NG-RAN).

The base station 120 may be an evolved base station (eNB) used in the 4G system. Alternatively, the base station 120 may be a centralized distributed architecture base station (gNB) used in the 5G system. When the base station 120 adopts the centralized distributed architecture, it usually includes a central unit (CU) and at least two distributed units (DUs). A protocol stack of a packet data convergence protocol (PDCP) layer, a radio link control (RLC) layer and a media access control (MAC) layer is provided in the central unit. A protocol stack of a physical (PHY) layer is provided in the distributed unit. The specific implementation of the base station 120 is not limited in embodiments of the present disclosure.

A wireless connection may be established between the base station 120 and the user equipment 110 through a wireless radio. In different embodiments, the wireless radio is a wireless radio based on the 4th generation mobile communication network technology (4G) standard. Alternatively, the wireless radio is a wireless radio based on the 5th generation mobile communication network technology (5G) standard. For example, the wireless radio is a new radio. Alternatively, the wireless radio may also be a wireless radio based on the next generation mobile communication network technology standard of the 5G.

In some embodiments, an end to end (E2E) connection may also be established between the user equipment 110, for example, a vehicle to vehicle (V2V) communication, a vehicle to infrastructure (V2I) communication and a vehicle to pedestrian (V2P) communication in a vehicle to everything (V2X) communication.

Here, the user equipment described above may be considered as a terminal device in embodiments below.

In some embodiments, the wireless communication system may further include a network management device 130.

Several base stations 120 are connected to the network management device 130, respectively. The network management device 130 may be a core network device in the wireless communication system, for example, the network management device 130 may be a mobility management entity (MME) in an evolved packet core (EPC). Alternatively, the network management device may be other core network devices, such as a serving gateway (SGW), a public data network gateway (PGW), a policy and charging rules function (PCRF) unit or a home subscriber server (HSS). The implementation form of the network management device 130 is not limited in embodiments of the present disclosure.

In order to facilitate the understanding of those skilled in the art, several implementations are listed in embodiments of the present disclosure to clearly illustrate technical solutions according to embodiments of the present disclosure. Of course, those skilled in the art can understand that various implementations according to embodiments of the present disclosure can be performed separately or in combination with the method as set forth in other implementations according to embodiments of the present disclosure, or can be performed further in combination with some methods in other related arts, which is not limited in embodiments of the present disclosure.

In order to better understand the technical solution described in any embodiment of the present disclosure, scenarios where terminals are paged in groups in the related art are described first.

In an embodiment, if grouping is not performed for paging, all terminals will be awakened at a paging occasion. In an embodiment, since probabilities of terminals being paged in a time period corresponding to the paging occasion are different, terminals with a low paging probability will be awakened falsely, resulting in unnecessary power consumption. Therefore, it is necessary to group terminals for paging, and terminals are paged in a group paging manner.

In an embodiment, paging group information may be carried in paging downlink control information (DCI), and may also be carried in a paging early indication (PEI). No matter which grouping manner is adopted, a terminal and a network (including a base station and a core network) need to agree on the grouping of the terminal, so that a paging message can be sent to the terminal normally.

In an embodiment, there is provided a random manner for determining a group by a modulo operation based on a UE-ID, and a paging group can be obtained by the modulo operation based on the UE-ID, with a formula of:

$$wg = floor\left(floor\left(\frac{UE\_ID}{N \times N_s}\right)/N_n\right) \bmod N_w;$$

where $N_w$ is a total number of paging group resources, and $wg$ is an index of a selected paging group resource.

The modulo operation based on the UE-ID is a random selection or random allocation manner. That is, the modulo operation is performed based on the UE-IDs in all paging group resources. Here, $N$ is a paging frame density in a time domain, $Ns$ is a paging density within a paging frame in the time domain; $Nn$ is a paging narrowband; and $Nw$ is the total number of paging group resources.

In an embodiment, the manner that the network configures paging groups of terminals may be implemented by the core network. Here, unlike the manner of allocating probabilities in LTE, group IDs are directly allocated in NR. In this case, the network allocates the group IDs based on implementations. For example, allocation is performed according to terminal attributes or statistical paging probabilities.

In an embodiment, if the core network does not provide the terminal with a group ID, the terminal will fall back to the random manner based on the UE-ID to select a paging group resource.

Therefore, it may be considered that there are two paging grouping manners, one is that the network allocates paging groups, and the other is the random manner based on the UE-ID. In an embodiment, the base station needs to notify the terminal which manner is supported, so that the base station and the terminal can achieve an agreement on the determination of the group and on the selection of the paging group resource. If neither method is supported, the terminal will perform paging monitoring in a manner which does not support the group paging.

In an embodiment, the base station can support both grouping manners, and the groups obtained by the both grouping manners do not overlap. Therefore, a total number supported by the base station for groups allocated by core network may be not enough to support a maximum number of groups allocated by core network. In view of this, the base station may need to consider how to map groups allocated by the core network to groups on a Lay1 that can be supported by the base station.

As shown in FIG. 2, a method for group paging is provided in embodiments of the present disclosure. The method is performed by a base station and includes a following step.

In step 21, mapping relationship information is sent to a terminal.

The mapping relationship information indicates a mapping relationship between information of a paging group and a paging group resource.

In an embodiment, the mapping relationship information may be used by the terminal to determine the mapping relationship between the information of the paging group and the paging group resource. In this way, the terminal can be indicated how to map a paging group to a paging group resource.

In an embodiment, whether to send the mapping relationship information to the terminal may be determined according to a number of paging groups allocated in a predetermined manner and a number of paging groups supported by the base station for the predetermined manner. The predetermined manner is a manner that a network allocates paging groups.

Here, the terminal may be, but is not limited to, a mobile phone, a wearable device, a vehicle-mounted terminal, a road side unit (RSU), a smart home terminal, an industrial sensor device, and/or a medical device, etc.

The base station involved in the present disclosure may be an access device for the terminal to access the network. Here, the base station may include various types of base stations, for example, a base station of a third-generation mobile communication (3G) network, a base station of a fourth-generation mobile communication (4G) network, a base station of a fifth-generation mobile communication (5G) network, or other evolved base stations. Here, the base station can support both the manner of allocating paging groups by the network and the manner of randomly allocating paging groups.

In an embodiment, the group paging may be such a paging manner that terminals are divided into different groups; the network sends a group paging message to page all terminals in a group, without sending a paging message separately for each terminal; after receiving the group paging message, the terminal determines whether it belongs to the paged group; if the terminal belongs to the paged group, it responds to the group paging message; if the terminal does not belong to the paged group, the terminal ignores the group paging message.

In an embodiment, there may be a plurality of groups for the group paging. Here, different paging resources may be configured for different groups. A terminal may belong to one of the plurality of groups. In response to the paging group to which the terminal belongs being determined, the terminal monitors a paging message with a paging resource indicated for the paging group. Here, which group the terminal belongs to may be determined by a modulo operation based on a UE-ID or may be determined by a certain core network device in the core network. It should be noted that a predetermined group may also be divided into a plurality of paging subgroups. Certainly, a group described here may refer to a paging subgroup, which is not limited here. The paging group described in the present disclosure may be a group for the group paging.

In an embodiment, the number of paging groups allocated in the predetermined manner is different from the number of paging groups supported by the base station for the predetermined manner. In an embodiment, if the number of paging groups allocated in the predetermined manner is greater than the number of paging groups supported by the base station for the predetermined manner, it is determined to send the mapping relationship information to the terminal; or if the number of paging groups allocated in the predetermined manner is not greater than the number of paging groups supported by the base station for the predetermined manner, it is determined not to send the mapping relationship information to the terminal. It should be noted that, if the number of paging groups allocated in the predetermined manner is not greater than the number of paging groups supported by the base station for the predetermined manner, it may also be determined to send the mapping relationship information to the terminal.

Here, the number of paging groups supported by the base station for the predetermined manner may correspond to a number of resources that can be provided for the paging groups. It can be understood that the term "greater than" also covers the meaning of "greater than or equal to", and the term "less than" also covers the meaning of "less than or equal to".

In an embodiment, the number of paging groups allocated in the predetermined manner may be allocated by the core network, and the base station may receive the number of paging groups allocated in the predetermined manner sent by the core network. Whether to send the mapping relationship information to the terminal is determined according to the number of paging groups allocated in the predetermined manner and the number of paging groups supported by the base station for the predetermined manner. Here, the number of paging groups allocated in the predetermined manner may be understood as a maximum number of paging groups allocated by the network.

In an embodiment, the number supported by the base station for paging groups allocated in the predetermined manner may be allocated by the base station. After the base station determines the number of paging groups allocated for the predetermined manner, it determines whether to send the mapping relationship information to the terminal according to the number of paging groups allocated in the predetermined manner and the number of paging groups supported by the base station for the predetermined manner.

It should be noted that the number of paging groups supported by the base station for the predetermined manner is a number determined according to a predetermined protocol; or the number of paging groups supported by the base station for the predetermined manner is a total number of paging groups supported by the base station. For example, the paging groups supported by the base station may be paging groups on a Lay1 supported by the base station.

In an embodiment, number information may indicate that the base station supports the manner that the network allocates paging groups. That is, after receiving the number information, the terminal can determine according to the number information that the base station supports a manner of configuring paging groups in the predetermined manner.

In an embodiment, after determining the number of paging groups supported by the base station for the predetermined manner, the base station may send the data information to the terminal. For example, the base station may send first number information to the terminal, and the first number information carries a value of the number of paging groups supported by the base station for the predetermined manner. For example, the value N=4. In this way, the first number information may explicitly indicate the number of paging groups supported by the base station for the predetermined manner. Alternatively, the base station may send second number information to the terminal, and the second number information carries an indication which enables the terminal to determine the number of paging groups supported by the base station for the predetermined manner according to a number obtained in a target manner. For example, the random grouping manner (such as by the modulo operation based on the UE-ID, i.e., the target manner) and the manner that the network allocates paging groups (i.e., the predetermined manner) are supported to determine paging groups, and a maximum number supported by the base station for paging groups obtained in different manners is 8, after the terminal determines that a number of paging groups determined in the random grouping manner is 4, the terminal can determine that a number of paging groups allocated by the network is 4. In this way, the second number information may implicitly indicate that the number of paging groups supported by the base station for the predetermined manner is 4. In an embodiment, when an information field of the second data information indicates a predetermined value, it indicates the terminal to determine the number of paging groups supported by the base station for the predetermined manner according to the number obtained in the target manner.

In an embodiment, the base station sends to the terminal the number of paging groups supported by the base station for the predetermined manner, for the terminal to determine the mapping relationship between the information of the paging group and the paging group resource. After obtaining this number of paging groups, the terminal can establish a mapping relationship between information of a paging group and a paging group resource according to a protocol.

In an embodiment, if the base station can determine the maximum number of paging groups allocated by the core network, and the base station can provide enough paging groups to support the grouping manner, the base station just needs to notify the terminal of a number of paging groups that can be supported by the base station for the predetermined manner. For example, the number notified by the base station is 8. The maximum number of paging groups allocated from the core network will not exceed 8, and the terminal can always find respective paging group resources according to one-to-one mapping. For another example, the base station notifies the terminal of the number of paging groups that can be supported by the base station for the predetermined manner by using an explicit indication (such as a flag indication), and the terminal can always find respective paging group resources according to the one-to-one mapping.

In an embodiment, the base station may only provide the number of paging groups to support the paging grouping manner. For example, the number of paging groups notified by the base station is 4; and the maximum number of paging groups allocated from the core network may exceed 4 or not exceed 4. Then the terminal can always find respective paging group resources according to the one-to-one mapping. For example, if the maximum number of paging groups allocated by the core network does not exceed 4, the terminal can find the respective paging group resources according to the one-to-one mapping; if the number of paging groups allocated by the core network exceeds 4, the terminal maps extra paging groups than 4 paging groups to the last paging group resource. It should be noted that the last paging group resource may be a paging group resource with a lower order.

In an embodiment, the base station sends to the terminal the number of paging groups supported by the base station for the predetermined manner and the number of paging groups allocated by the network, for the terminal to determine the mapping relationship between the information of the paging group and the paging group resource. After receiving the number of paging groups supported by the base station for the predetermined manner and the number of paging groups allocated by the network, the terminal establishes the mapping relationship between the information of the paging group and the paging group resource according to a protocol.

For example, the base station supports 2 paging groups in total, i.e., a first paging group and a second paging group. The number of paging groups allocated by the core network is 4, which are a first paging group, a second paging group, a third paging group and a fourth paging group, respectively. The first paging group and the second paging group may be mapped to a first group resource and a second paging group resource, respectively, and the remaining two paging groups may be mapped to the last paging group resource.

In an embodiment, the predetermined mapping relationship may be a mapping relationship determined by mapping according to a formula. For example, paging group resources corresponding to respective paging groups may be determined in an even division manner.

For example, the base station supports 2 paging groups in total, i.e., a first paging group and a second paging group, corresponding to 2 paging group resources. The number of paging group resources is 8, which are a first paging group resource, a second paging group resource, ..., and an eighth paging group resource. The paging group resources may be evenly divided, so that the first paging group resource to the fourth paging group resource are mapped to the first paging group, and the fifth paging group resource to the eighth paging group resource are mapped to the second paging group. It should be noted that, embodiments of the present disclosure are not limited to the above even division manner, and the paging group resources may be randomly and equally divided, and allocated to the first paging group and the second paging group, respectively.

For example, the base station supports 2 paging groups in total, i.e., a first paging group and a second paging group, corresponding to 2 paging group resources. The number of paging groups is 7, which are a first paging group, a second paging group, ..., and a seventh paging group. The first paging group to the fourth paging group may be mapped to the first paging group resource, and the remaining three paging groups may be mapped to the second paging group resource. It should be noted that, embodiments of the present disclosure are not limited to the above even division manner, and the paging group resources may be randomly and equally divided, and allocated to the first paging group and the second paging group, respectively.

For example, the base station supports 2 paging groups in total, i.e., a first paging group and a second paging group, corresponding to 2 paging group resources. The number of paging groups is 7, which are a first paging group, a second paging group, ..., and a seventh paging group. The first paging group to the third paging group may be mapped to the first paging group resource, and the remaining 4 paging groups may be mapped to the second paging group resource. It should be noted that, embodiments of the present disclosure are not limited to the above even division manner, and the paging groups may also be randomly and equally divided, and allocated to the first paging group and the second paging group, respectively.

In the above embodiments, the base station does not need to provide the mapping relationship indicated explicitly, and only needs to provide the number of paging groups supported by the base station for the predetermined manner and/or the number of paging groups allocated by the network for the terminal to determine the mapping relationship.

In an embodiment, the mapping relationship between the information of the paging group and the paging group resource is established. Whether to send the mapping relationship information to the terminal is determined according to the number of paging groups allocated in the predetermined manner and the number of paging groups supported by the base station for the predetermined manner. Here, the mapping relationship information indicates the mapping relationship.

In an embodiment, a mapping relationship between a single paging group and a resource set including at least one paging group resource may be established. For example, the mapping relationship may be a relationship in which a single paging group corresponds to a single paging group resource, as shown in Table 1:

Table 1: one-to-one relationship

| paging group | paging group resource |
|---|---|
| Subgroup 0 | paging group radio resource 0 |
| Subgroup 1 | paging group radio resource 1 |
| ... | ... |

For example, the mapping relationship may be a relationship in which a single paging group corresponds to multiple paging group resources, as shown in Table 2:

Table 2: one-to-multiple relationship

| paging group | paging group resource |
|---|---|
| Subgroup 0 | paging group radio resource 0 |
| | paging group radio resource 1 |
| Subgroup 1 | paging group radio resource 2 |
| | paging group radio resource 3 |
| ... | ... |

In an embodiment, a mapping relationship between a group set including multiple paging groups and a resource set including at least one paging group resource may be established. For example, the mapping relationship may be a relationship in which multiple paging groups correspond to multiple paging group resources, as shown in Table 3:

Table 3, multiple-to-multiple relationship

| paging group | paging group resource |
|---|---|
| Subgroup 0 | paging group radio resource 0 |
| Subgroup 1 | paging group radio resource 1 |
| ... | ... |

In the above embodiments, the base station needs to explicitly notify the terminal of the mapping relationship.

In embodiments of the present disclosure, the mapping relationship information is sent to the terminal, and the mapping relationship information indicates the mapping relationship between the information of the paging group and the paging group resource. Here, since the mapping relationship information indicating the mapping relationship between the information of the paging group and the paging group resource can be sent to the terminal, the terminal is able to determine a paging group resource for a paging group according to the mapping relationship, so that the paging failure caused by the failure to determine the paging group resource for paging monitoring is reduced, and the reliability of the group paging is improved, as compared with the case where the paging group resource cannot be determined when the number of paging groups allocated by the network is inconsistent with the number of paging groups supported by the base station.

It should be noted that those skilled in the art can understand that the method according to embodiments of the present disclosure may be performed separately, or may be performed in combination with some other methods according to embodiments of the present disclosure or some other methods in related art.

Embodiments of the present disclosure provide a method for group paging, which is performed by a base station and includes: determining whether to send mapping relationship information to a terminal according to a number of paging groups allocated in a predetermined manner and a number of paging groups supported by the base station for the predetermined manner. The mapping relationship information indicates a mapping relationship between information of a paging group and a paging group resource, and the predetermined manner is a manner that a network allocates paging groups.

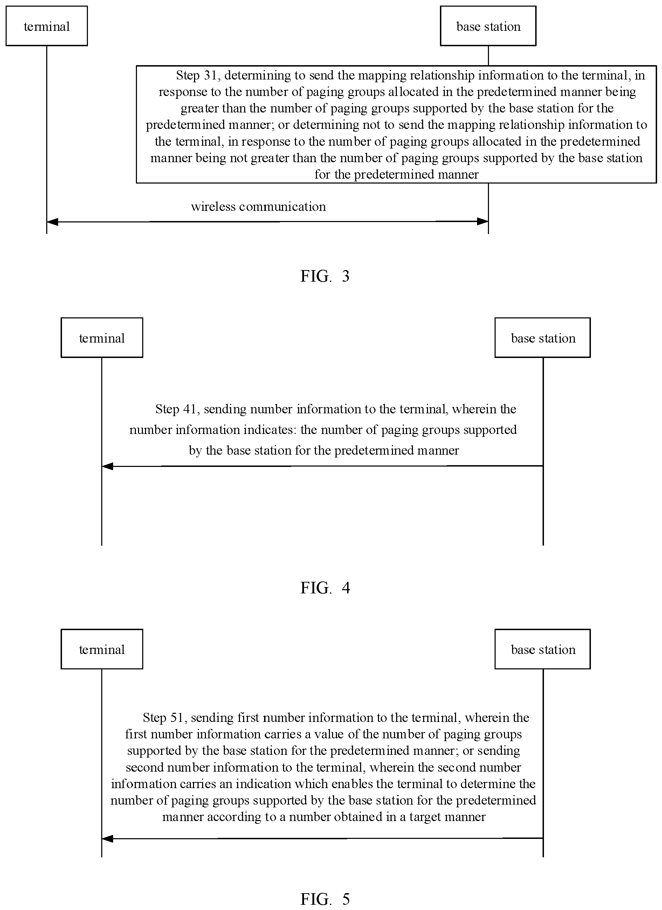

As shown in FIG. 3, a method for group paging is provided in embodiments of the present disclosure. The method is performed by a base station and includes a following step.

In step 31, it is determined to send the mapping relationship information to the terminal in response to the number of paging groups allocated in the predetermined manner being greater than the number of paging groups supported by the base station for the predetermined manner; or it is determined not to send the mapping relationship information to the terminal in response to the number of paging groups allocated in the predetermined manner being not greater than the number of paging groups supported by the base station for the predetermined manner.

Here, the mapping relationship information indicates the mapping relationship between the information of the paging group and the paging group resource.

In an embodiment, after obtaining the number of paging groups allocated in the predetermined manner and determining the number of paging groups supported by the base station for the predetermined manner, the base station compares the number of paging groups allocated in the predetermined manner with the number of paging groups supported by the base station for the predetermined manner. For example, when the number of paging groups allocated in the predetermined manner is greater than the number of paging groups supported by the base station for the predetermined manner, it is determined to send the mapping relationship information to the terminal; or when the number of paging groups allocated in the predetermined manner is not greater than the number of paging groups supported by the base station for the predetermined manner, it is determined not to send the mapping relationship information to the terminal. It should be noted that if the number of paging groups allocated in the predetermined manner is not greater than the number of paging groups supported by the base station for the predetermined manner, it is also possible to determine to send the mapping relationship information to the terminal, which is not restricted in the present disclosure.

In an embodiment, the base station pre-establishes the mapping relationship between the information of the paging group and the paging group resource. After the mapping relationship is established, in response to the number of paging groups allocated in the predetermined manner being greater than the number of paging groups supported by the base station for the predetermined manner, it is determined to send the mapping relationship information to the terminal; or in response to the number of paging groups allocated in the predetermined manner being not greater than the number of paging groups supported by the base station for the predetermined manner, it is determined not to send the mapping relationship information to the terminal. It should be noted that if the number of paging groups allocated in the predetermined manner is not greater than the number of paging groups supported by the base station for the predetermined manner, it is also possible to determine to send the mapping relationship information to the terminal, which is not restricted in the present disclosure.

In an embodiment, sending the mapping relationship information to the terminal may be broadcasting the mapping relationship information to the terminal.

It should be noted that those skilled in the art can understand that the method according to embodiments of the present disclosure may be performed separately, or may be performed in combination with some other methods according to embodiments of the present disclosure or some other methods in related art.

As shown in FIG. 4, a method for group paging is provided in embodiments of the present disclosure. The method is performed by a base station and includes a following step.

In step 41, number information is sent to a terminal, and the number information indicates: the number of paging groups supported by the base station for the predetermined manner.

In an embodiment, the number information may be sent to the terminal by using a radio resource control RRC message.

In an embodiment, after the number of paging groups supported by the base station for the predetermined manner is determined, the number information is sent to the terminal.

In an embodiment, first number information is sent to the terminal, and the first number information carries a value of the number of paging groups supported by the base station for the predetermined manner. For example, an information field of the first number information is configured. When a value of the information field is "011", the value of the number supported by the base station for the predetermined manner carried in the first number information is 3; when the value of the information field is "100", the value of the number supported by the base station for the predetermined manner carried in the first number information is 4.

In an embodiment, second number information is sent to the terminal, and the second number information carries an indication which enables the terminal to determine the number of paging groups supported by the base station for the predetermined manner according to a number obtained in a target manner. For example, an information field of the second number information is configured. When a value of the information field is "1", and a maximum number of paging groups supported to be obtained in the random grouping manner (such as by the modulo operation based on the UE-ID, i.e., the target manner) and in the manner that the network allocates paging groups (the predetermined manner) is 8, after the terminal determines that the number of paging groups determined in the random grouping manner is 4, the terminal can determine that the number of paging groups allocated by the network is 4. In this way, the second number information may implicitly indicate that the number of paging groups supported by the base station for the predetermined manner is 4. Here, the target mode may be the random grouping manner.

Here, the number of paging groups supported by the base station for the predetermined manner is a number determined according to a predetermined protocol; or the number of paging groups supported by the base station for the predetermined manner is a total number of paging groups supported by the base station.

It should be noted that those skilled in the art can understand that the method according to embodiments of the present disclosure may be performed separately, or may be performed in combination with some other methods according to embodiments of the present disclosure or some other methods in related art.

As shown in FIG. 5, a method for group paging is provided in embodiments of the present disclosure. The method is performed by a base station and includes a following step.

In step 51, first number information is sent to the terminal, and the first number information carries a value of the number of paging groups supported by the base station for the predetermined manner; or second number information is sent to the terminal, and the second number information carries an indication which enables the terminal to determine the number of paging groups supported by the base station for the predetermined manner according to a number obtained in a target manner.

Here, the number of paging groups supported by the base station for the predetermined manner is a number determined according to a predetermined protocol; or the number of paging groups supported by the base station for the predetermined manner is a total number of paging groups supported by the base station.

It should be noted that those skilled in the art can understand that the method according to embodiments of the present disclosure may be performed separately, or may be performed in combination with some other methods according to embodiments of the present disclosure or some other methods in related art.

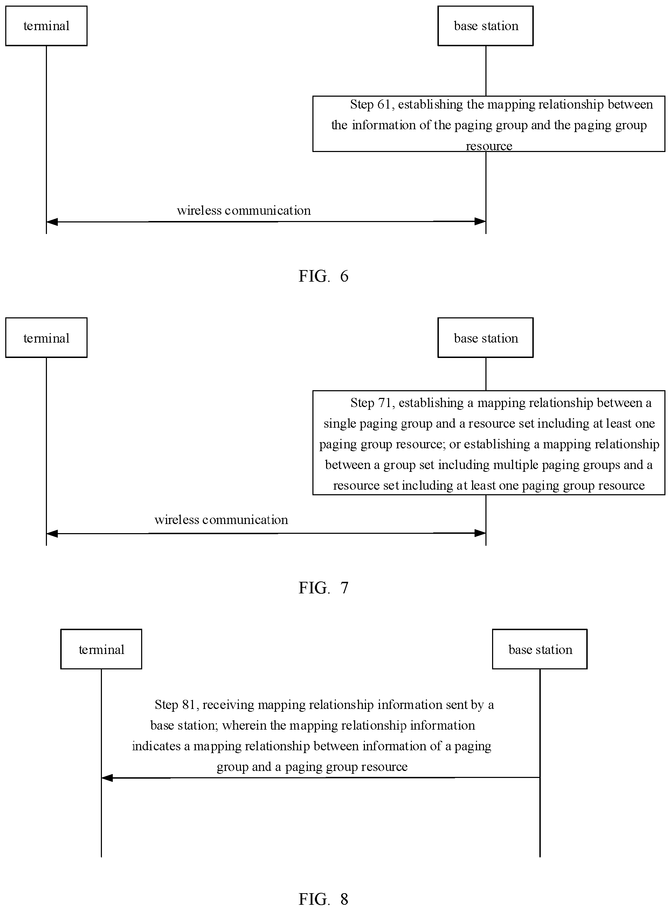

As shown in FIG. 6, a method for group paging is provided in embodiments of the present disclosure. The method is performed by a base station and includes a following step.

In step 61, a mapping relationship between information of a paging group and a paging group resource is established.

In an embodiment, the mapping relationship between the information of the paging group and the paging group resource may be established in advance. Mapping relationship information is sent to the terminal. Here, the mapping relationship information indicates the mapping relationship.

In an embodiment, the mapping relationship between the information of the paging group and the paging group resource may be established in advance. Whether to send the mapping relationship information to the terminal is determined according to the number of paging groups allocated in the predetermined manner and the number of paging groups supported by the base station for the predetermined manner.

In an embodiment, the mapping relationship may be a mapping relationship between a single paging group and a resource set including at least one paging group resource.

In an embodiment, the mapping relationship may be a mapping relationship between a group set including multiple paging groups and a resource set including at least one paging group resource.

It should be noted that those skilled in the art can understand that the method according to embodiments of the present disclosure may be performed separately, or may be performed in combination with some other methods according to embodiments of the present disclosure or some other methods in related art.

As shown in FIG. 7, a method for group paging is provided in embodiments of the present disclosure. The method is performed by a base station and includes a following step.

In step 71, a mapping relationship between a single paging group and a resource set including at least one paging group resource is established; or a mapping relationship between a group set including multiple paging groups and a resource set including at least one paging group resource is established.

Here, the paging group resource may be a time domain resource and/or a frequency domain resource used for paging monitoring.

In an embodiment, the resource set may include one or more paging group resources, and reference may be made to the descriptions made in connection with Table 1 and Table 2 for details.

In an embodiment, the group set may include multiple paging groups, and the resource set may include multiple paging group resources, and reference may be made to the descriptions made in connection with Table 3 for details.

It should be noted that those skilled in the art can understand that the method according to embodiments of the present disclosure may be performed separately, or may be performed in combination with some other methods according to embodiments of the present disclosure or some other methods in related art.

As shown in FIG. 8, a method for group paging is provided in embodiments of the present disclosure. The method is performed by a terminal and includes a following step.

In step 81, mapping relationship information sent by the base station is received. The mapping relationship information indicates a mapping relationship between information of a paging group and a paging group resource.

Here, the terminal may be, but is not limited to, a mobile phone, a wearable device, a vehicle-mounted terminal, a road side unit (RSU), a smart home terminal, an industrial sensor device, and/or a medical device, etc.

The base station involved in the present disclosure may be an access device for the terminal to access the network. Here, the base station may include various types of base stations, for example, a base station of a third-generation mobile communication (3G) network, a base station of a fourth-generation mobile communication (4G) network, a base station of a fifth-generation mobile communication (5G) network, or other evolved base stations. Here, the base station can support both the manner of allocating paging groups by the network and the manner of randomly allocating paging groups.

In an embodiment, the group paging may be such a paging manner that terminals are divided into different groups; the network sends a group paging message to page all terminals in a group, without sending a paging message separately for each terminal; after receiving the group paging message, the terminal determines whether it belongs to the paged group; if the terminal belongs to the paged group, it responds to the group paging message; if the terminal does not belong to the paged group, the terminal ignores the group paging message.

In an embodiment, there may be a plurality of groups for the group paging. Here, different paging resources may be configured for different groups. A terminal may belong to one of the plurality of groups. In response to the paging group to which the terminal belongs being determined, the terminal monitors a paging message with a paging resource indicated for the paging group. Here, which group the terminal belongs to may be determined by a modulo operation based on a UE-ID or may be determined by a certain core network device in the core network. It should be noted that a predetermined group may also be divided into a plurality of paging subgroups. Certainly, a group described here may refer to a paging subgroup, which is not limited here.

In an embodiment, the predetermined manner is a manner that a network allocates paging groups. The number of paging groups allocated in the predetermined manner is different from the number of paging groups supported by the base station for the predetermined manner. In an embodiment, if the number of paging groups allocated in the predetermined manner is greater than the number of paging groups supported by the base station for the predetermined manner, the base station determines to send the mapping relationship information to the terminal; or if the number of paging groups allocated in the predetermined manner is not greater than the number of paging groups supported by the base station for the predetermined manner, the base station determines not to send the mapping relationship information to the terminal. It should be noted that, if the number of paging groups allocated in the predetermined manner is not greater than the number of paging groups supported by the base station for the predetermined manner, the base station may also determine to send the mapping relationship information to the terminal. Here, the number of paging groups supported by the base station for the predetermined manner may correspond to a number of resources that can be provided for the paging groups. It can be understood that the term "greater than" also covers the meaning of "greater than or equal to", and the term "less than" also covers the meaning of "less than or equal to".

In an embodiment, the number of paging groups allocated in the predetermined manner may be allocated by the core network, and the base station may receive the number of paging groups allocated in the predetermined manner sent by the core network. The base station determines whether to send the mapping relationship information to the terminal according to the number of paging groups allocated in the predetermined manner and the number of paging groups supported by the base station for the predetermined manner. Here, the number of paging groups allocated in the predetermined manner may be understood as a maximum number of paging groups allocated by the network.

In an embodiment, the number supported by the base station for paging groups allocated in the predetermined manner may be allocated by the base station. After the base station determines the number of paging groups allocated for the predetermined manner, it determines whether to send the mapping relationship information to the terminal according to the number of paging groups allocated in the predetermined manner and the number of paging groups supported by the base station for the predetermined manner.

It should be noted that the number of paging groups supported by the base station for the predetermined manner is a number determined according to a predetermined protocol; or the number of paging groups supported by the base station for the predetermined manner is a total number of paging groups supported by the base station. For example, the paging groups supported by the base station may be paging groups on a Lay1 supported by the base station.

In an embodiment, number information may indicate that the base station supports the manner that the network allocates paging groups. That is, after receiving the number information, the terminal can determine according to the number information that the base station supports a manner of configuring paging groups in the predetermined manner.

In an embodiment, after determining the number of paging groups supported by the base station for the predetermined manner, the base station may send the data information to the terminal. For example, the base station may send first number information to the terminal, and the first number information carries a value of the number of paging groups supported by the base station for the predetermined manner. For example, the value N=4. In this way, the first number information may explicitly indicate the number of paging groups supported by the base station for the predetermined manner. Alternatively, the base station may send second number information to the terminal, and the second number information carries an indication which enables the terminal to determine the number of paging groups supported by the base station for the predetermined manner according to a number obtained in a target manner. For example, the random grouping manner (such as by the modulo operation based on the UE-ID, i.e., the target manner) and the manner that the network allocates paging groups (i.e., the predetermined manner) are supported to determine paging groups, and a maximum number supported by the base station for paging groups obtained in different manners is 8, after the terminal determines that a number of paging groups determined in the random grouping manner is 4, the terminal can determine that a number of paging groups allocated by the network is 4. In this way, the second number information may implicitly indicate that the number of paging groups supported by the base station for the predetermined manner is 4. In an embodiment, when an information field of the second data information indicates a predetermined value, it indicates the terminal to determine the number of paging groups supported by the base station for the predetermined manner according to the number obtained in the target manner.

In an embodiment, the base station establishes the mapping relationship between the information of the paging group and the paging group resource. The base station determines whether to send the mapping relationship information to the terminal according to the number of paging groups allocated in the predetermined manner and the number of paging groups supported by the base station for the predetermined manner. Here, the mapping relationship information indicates the mapping relationship.

In an embodiment, the base station may establish a mapping relationship between a single paging group and a resource set including at least one paging group resource. For example, the mapping relationship may be a relationship in which a single paging group corresponds to a single paging group resource. For example, the mapping relationship may be a relationship in which a single paging group corresponds to multiple paging group resources.

In an embodiment, the base station may establish a mapping relationship between a group set including multiple paging groups and a resource set including at least one paging group resource. For example, the mapping relationship may be a relationship in which multiple paging groups correspond to multiple paging group resources.

It should be noted that those skilled in the art can understand that the method according to embodiments of the present disclosure may be performed separately, or may be performed in combination with some other methods according to embodiments of the present disclosure or some other methods in related art.

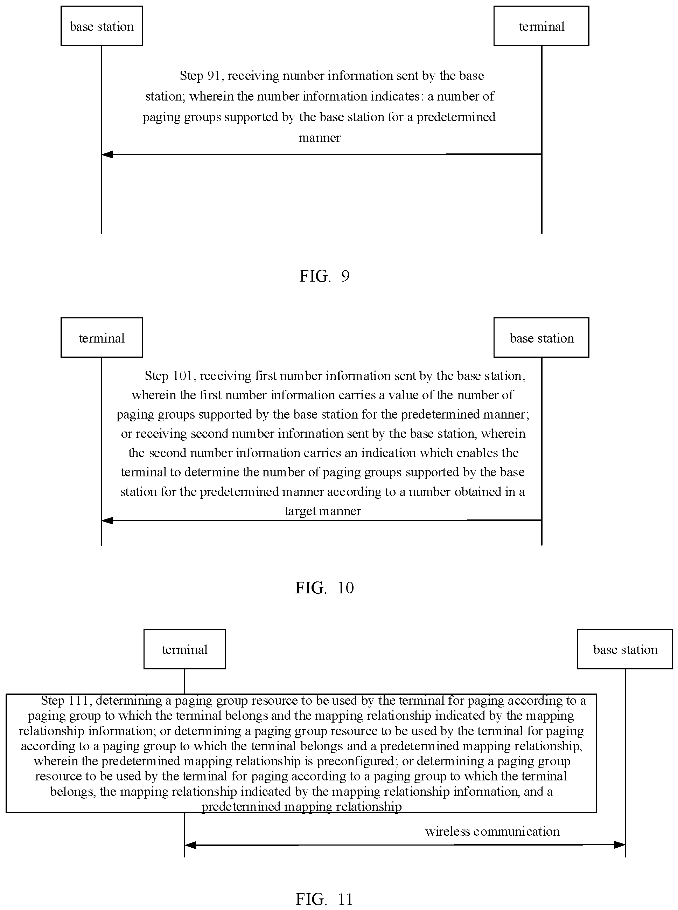

As shown in FIG. 9, a method for group paging is provided in embodiments of the present disclosure. The method is performed by a terminal and includes a following step.

In step 91: number information sent by the base station is received, and the number information indicates: the number of paging groups supported by the base station for the predetermined manner.

In an embodiment, the number information that is sent by the base station via a radio resource control RRC message to the terminal may be received.

In an embodiment, after determining the number of paging groups supported by the base station for the predetermined manner, the base station sends the number information to the terminal.

In an embodiment, first number information sent by the base station is received, and the first number information carries a value of the number of paging groups supported by the base station for the predetermined manner. For example, an information field of the first number information is configured. When a value of the information field is "011", the value of the number supported by the base station for the predetermined manner carried in the first number information is 3; when the value of the information field is "100", the value of the number supported by the base station for the predetermined manner carried in the first number information is 4.

In an embodiment, second number information sent by the base station is received, and the second number information carries an indication which enables the terminal to determine the number of paging groups supported by the base station for the predetermined manner according to a number obtained in a target manner. For example, an information field of the second number information is configured. When a value of the information field is "1", and a maximum number of paging groups supported to be obtained in the random grouping manner (such as by the modulo operation based on the UE-ID, i.e., the target manner) and in the manner that the network allocates paging groups (the predetermined manner) is 8, after the terminal determines that the number of paging groups determined in the random grouping manner is 4, the terminal can determine that the number of paging groups allocated by the network is 4. In this way, the second number information may implicitly indicate that the number of paging groups supported by the base station for the predetermined manner is 4. Here, the target mode may be the random grouping manner.

Here, the number of paging groups supported by the base station for the predetermined manner is a number determined according to a predetermined protocol; or the number of paging groups supported by the base station for the predetermined manner is a total number of paging groups supported by the base station.

It should be noted that those skilled in the art can understand that the method according to embodiments of the present disclosure may be performed separately, or may be performed in combination with some other methods according to embodiments of the present disclosure or some other methods in related art.

As shown in FIG. 10, a method for group paging is provided in embodiments of the present disclosure. The method is performed by a terminal and includes a following step.

In step 101, first number information sent by the base station is received, and the first number information carries a value of the number of paging groups supported by the base station for the predetermined manner; or second number information sent by the base station is received, and the second number information carries an indication which enables the terminal to determine the number of paging groups supported by the base station for the predetermined manner according to a number obtained in a target manner.

Here, the number of paging groups supported by the base station for the predetermined manner is a number determined according to a predetermined protocol; or the number of paging groups supported by the base station for the predetermined manner is a total number of paging groups supported by the base station.

It should be noted that those skilled in the art can understand that the method according to embodiments of the present disclosure may be performed separately, or may be performed in combination with some other methods according to embodiments of the present disclosure or some other methods in related art.

In an embodiment, the mapping relationship includes: a mapping relationship between a single paging group and a resource set including at least one paging group resource; or a mapping relationship between a group set including multiple paging groups and a resource set including at least one paging group resource.

In an embodiment, the resource set may include one or more paging group resources, and reference may be made to the descriptions made in connection with Table 1 and Table 2 for details.

In an embodiment, the group set may include multiple paging groups, and the resource set may include multiple paging group resources, and reference may be made to the descriptions made in connection with Table 3 for details.

It should be noted that those skilled in the art can understand that the method according to embodiments of the present disclosure may be performed separately, or may be performed in combination with some other methods according to embodiments of the present disclosure or some other methods in related art.

As shown in FIG. 11, a method for group paging is provided in embodiments of the present disclosure. The method is performed by a terminal and includes a following step.

In step 111, a paging group resource to be used by the terminal for paging is determined according to a paging group to which the terminal belongs and the mapping relationship indicated by the mapping relationship information; or the paging group resource to be used by the terminal for paging is determined according to the paging group to which the terminal belongs and a predetermined mapping relationship, the predetermined mapping relationship is preconfigured, and in an embodiment, the predetermined mapping relationship is prespecified in a protocol; or the paging group resource to be used by the terminal for paging is determined according to the paging group to which the terminal belongs, the mapping relationship indicated by the mapping relationship information, and/or the predetermined mapping relationship.

In an embodiment, the mapping relationship is sequential mapping, and reference may be made to Table 1 for details. An arrangement order of paging groups is Subgroup 0, Subgroup 1, ...; and an arrangement order of paging group resources is radio resource 0, radio resource 1, ...; in this case, Subgroup 0 is mapped to radio resource 0; and Subgroup 1 is mapped to radio resource 1. In this way, after determining the paging group to which the terminal belongs, the terminal can determine the paging resource mapped to the paging group to which the terminal belongs according to information of the paging group to which the terminal belongs.

In an embodiment, if the paging group resources are insufficient, the mapping is performed in a default manner. Here, the default manner may be the predetermined manner.

For example, the number of paging groups supported by the base station for the predetermined manner is 2 in total, i.e., a first paging group and a second paging group. The number of paging groups is 4, then the first paging group and the second paging group are mapped to a first paging group resource and a second paging group resource, respectively, and the remaining 2 paging groups are mapped to the last paging group resource.

In an embodiment, the predetermined mapping relationship may be a mapping relationship determined by mapping according to a formula. For example, paging resources corresponding to respective paging groups may be determined in an even division manner.

For example, the base station supports 2 paging groups in total, i.e., a first paging group and a second paging group, corresponding to 2 paging group resources. The number of paging groups is 8, which are a first paging group, a second paging group, ..., and an eighth paging group. The paging resources may be evenly divided, so that the first paging group to the fourth paging group are mapped to the first paging group resource, and the fifth paging group to the eighth paging group are mapped to the second paging group resource. It should be noted that, embodiments of the present disclosure are not limited to the above even division manner, and the paging groups may also be randomly and equally divided, and allocated to the first paging group and the second paging group, respectively.

For example, the base station supports 2 paging groups in total, i.e., a first paging group and a second paging group, corresponding to 2 paging group resources. The number of paging groups is 7, which are a first paging group, a second paging group, ..., and a seventh paging group. The first paging group to the fourth paging group may be mapped to the first paging group resource, and the remaining three paging groups may be mapped to the second paging group resource. It should be noted that, embodiments of the present disclosure are not limited to the above even division manner, and the paging groups may also be randomly and equally divided, and allocated to the first paging group and the second paging group, respectively.

For example, the base station supports 2 paging groups in total, i.e., a first paging group and a second paging group, corresponding to 2 paging group resources. The number of paging groups is 7, which are a first paging group, a second paging group, ..., and a seventh paging group. The first paging group to the third paging group may be mapped to the first paging group resource, and the remaining 4 paging groups may be mapped to the second paging group resource. It should be noted that, embodiments of the present disclosure are not limited to the above even division manner, and the paging groups may also be randomly and equally divided, and allocated to the first paging group and the second paging group, respectively.

It should be noted that, when the base station supports only one paging group, all paging resources may be allocated to the single paging group.

In an embodiment, when a mapping resource cannot be determined according to the mapping relationship indicated by the mapping relationship information sent by the base station, for example, the number of paging groups supported by the base station for the predetermined manner is *a*, the number of paging groups allocated in the predetermined manner is b, where *b* is greater than *a*, and the base station only broadcasts *a* mapping relationships, so there are still *(b-a)* paging groups for which the respective paging resources cannot be determined. In this case, the respective paging resources for the remaining *(b-a)* paging groups can be determined according to a predetermined mapping relationship that is pre-configured.

For example, the base station only broadcasts that the number of paging groups supported by the base station is 3, and a number of mapping relationships broadcast is also 3, but the number of groups allocated in the predetermined manner is 8, in this case, only 3 paging groups can find the respective paging resources according to the mapping relationships, and for the remaining 5 paging groups, the respective paging resources can be determined according to the predetermined mapping relationship.

As an embodiment, the mapping relationship provided by the base station in an explicit indication and the mapping relationship specified in a protocol may be used in combination.

It should be noted that those skilled in the art can understand that the method according to embodiments of the present disclosure may be performed separately, or may be performed in combination with some other methods according to embodiments of the present disclosure or some other methods in related art.

In an embodiment, the predetermined mapping relationship includes: a mapping relationship between a paging group and a paging group resource determined according to an arrangement order of information of the paging group and an arrangement order of the paging group resource; or a mapping relationship between information of a paging group and a paging group resource determined according to a random selection manner.

In an embodiment, an arrangement order of paging groups is Subgroup 0, Subgroup 1, ...; and an arrangement order of paging group resources is radio resource 0, radio resource 1, ...; in this case, Subgroup 0 is mapped to radio resource 0; and Subgroup 1 is mapped to radio resource 1. In this way, after determining the paging group to which the terminal belongs, the terminal can determine the paging resource mapped to the paging group to which the terminal belongs according to information of the paging group to which the terminal belongs.

Here, the random selection manner may refer to randomly select a paging group resource.

It should be noted that those skilled in the art can understand that the method according to embodiments of the present disclosure may be performed separately, or may be performed in combination with some other methods according to embodiments of the present disclosure or some other methods in related art.

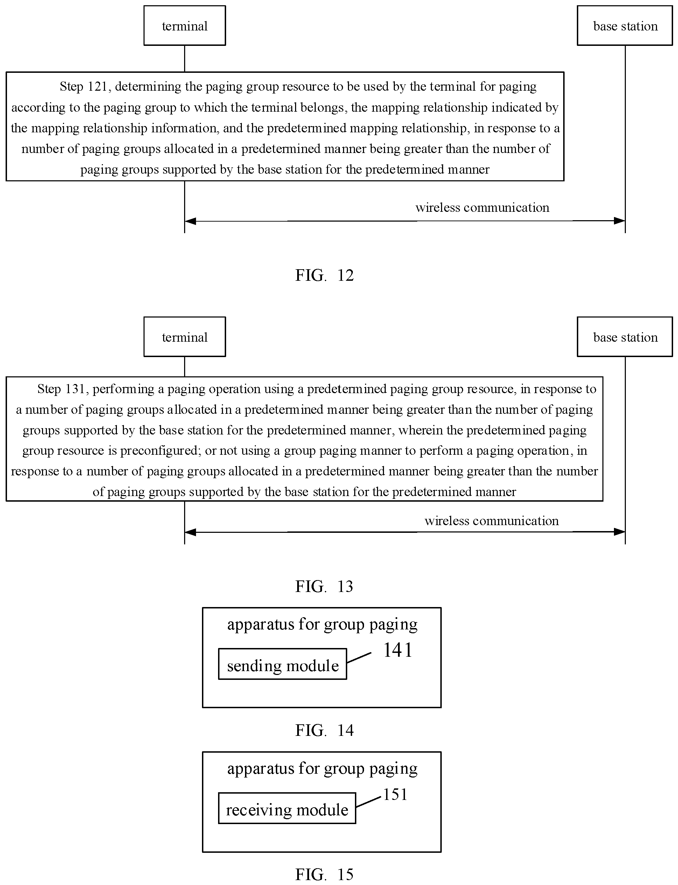

As shown in FIG. 12, a method for group paging is provided in embodiments of the present disclosure. The method is performed by a terminal and includes a following step.

In step 121, the paging group resource to be used by the terminal for paging is determined according to the paging group to which the terminal belongs, the mapping relationship indicated by the mapping relationship information, and the predetermined mapping relationship, in response to the number of paging groups allocated in the predetermined manner being greater than the number of paging groups supported by the base station for the predetermined manner.

For details, reference may be made to the descriptions of the step 111, which will not be elaborated here.

It should be noted that those skilled in the art can understand that the method according to embodiments of the present disclosure may be performed separately, or may be performed in combination with some other methods according to embodiments of the present disclosure or some other methods in related art.

As shown in FIG. 13, a method for group paging is provided in embodiments of the present disclosure. The method is performed by a terminal and includes a following step.

In step 131, a paging operation is performed using a predetermined paging group resource, in response to the number of paging groups allocated in the predetermined manner being greater than the number of paging groups supported by the base station for the predetermined manner, and the predetermined paging group resource is preconfigured; or a group paging manner is not used to perform a paging operation, in response to the number of paging groups allocated in the predetermined manner being greater than the number of paging groups supported by the base station for the predetermined manner.

Here, the predetermined paging group resource may be a resource indicated by an index of a Lay1 subgroup that is supported by the base station for the manner that CN allocates paging groups.

Here, not using the group paging manner to perform the paging operation may refer to performing the paging operation using a common or default paging resource, but not using the group paging manner to perform the paging operation.

It should be noted that those skilled in the art can understand that the method according to embodiments of the present disclosure may be performed separately, or may be performed in combination with some other methods according to embodiments of the present disclosure or some other methods in related art.

As shown in FIG. 14, an apparatus for group paging is provided in embodiments of the present disclosure. The apparatus includes a sending module.

The sending module 141 is configured to send mapping relationship information to a terminal.

The mapping relationship information indicates a mapping relationship between information of a paging group and a paging group resource.

It should be noted that those skilled in the art can understand that the method according to embodiments of the present disclosure may be performed separately, or may be performed in combination with some other methods according to embodiments of the present disclosure or some other methods in related art.

As shown in FIG. 15, an apparatus for group paging is provided in embodiments of the present disclosure. The apparatus includes a receiving module.

The receiving module 151 is configured to receive mapping relationship information sent by a base station.

The mapping relationship information indicates a mapping relationship between information of a paging group and a paging group resource.

It should be noted that those skilled in the art can understand that the method according to embodiments of the present disclosure may be performed separately, or may be performed in combination with some other methods according to embodiments of the present disclosure or some other methods in related art.

Embodiments of the present disclosure provide a communication device, which includes: a processor; and a memory for storing instructions executable by the processor. The processor is configured to implement the method according to any embodiment of the present disclosure when running the executable instructions.

The processor may include various types of storage media, which are non-transitory computer storage media that can continue to memorize information stored thereon when the communication device is powered off.

The processor may be connected to the memory through a bus or the like, to read executable programs stored in the memory.

Embodiments of the present disclosure also provide a computer storage medium, which has stored therein computer executable programs that, when executed by a processor, cause the method according to any embodiment of the present disclosure to be performed.

Regarding the apparatus as described in the above embodiments, the specific manners in which various modules perform operations have been described in detail in embodiments related to the method, which will not be described in detail here.

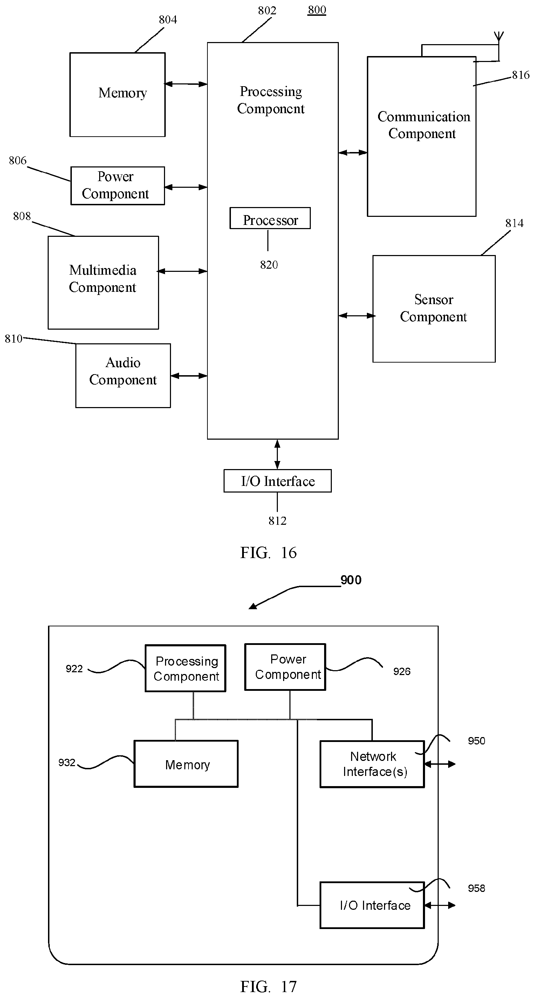

As shown in FIG. 16, an embodiment of the present disclosure provides a structure of a terminal.

Referring to a terminal 800 shown in FIG. 16, embodiments of the present disclosure provides a terminal 800. The terminal 800 may be a mobile phone, a computer, a digital broadcast terminal, a messaging device, a game console, a tablet device, a medical device, a fitness device, a personal digital assistant, or the like.

Referring to FIG. 16, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, phone calls, data communications, camera operations, and recording operations. The processing component 802 can include one or more processors 820 to execute instructions to perform all or some of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the terminal 800 and other devices. The terminal 800 can access a wireless network based on a communication standard, such as Wi-Fi, 2G, or 3G, or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above method.

As shown in FIG. 17, an embodiment of the present disclosure shows a structure of a base station.

For example, the base station 900 may be provided as a network device. Referring to FIG. 17, the base station 900 includes a processing component 922, which further includes one or more processors, and a memory resource represented by a memory 932 configured to store instructions executable by the processing component 922, such as application programs. The application programs stored in the memory 932 may include one or more modules each corresponding to a set of instructions. In addition, the processing component 922 is configured to execute instructions to perform any of the foregoing methods performed by the base station.

The base station 900 may also include a power component 926 configured to perform the power management of the base station 900, a wired or wireless network interfaces 950 configured to connect the base station 900 to a network, and an input/output (I/O) interface 958. The base station 900 may operate an operating system stored in the memory 932, such as Windows Server ™, Mac OS XTM, UnixTM, LinuxTM, FreeBSDTM, or the like.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including such departures from the present disclosure as come within known or customary practice in the art. It is intended that the specification and examples be considered as illustrative only, with a true scope and spirit of the present disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

**Claims**

1. A method for group paging, performed by a base station, comprising:

   sending mapping relationship information to a terminal;
   wherein the mapping relationship information indicates a mapping relationship between information of a paging group and a paging group resource.

2. The method according to claim 1, further comprising:
   determining whether to send the mapping relationship information to the terminal according to a number of paging groups allocated in a predetermined manner and a number of paging groups supported by the base station for the predetermined manner, wherein the predetermined manner is a manner that a network allocates paging groups.

3. The method according to claim 2, wherein determining whether to send the mapping relationship information to the terminal according to the number of paging groups allocated in the predetermined manner and the number of paging groups supported by the base station for the predetermined manner comprises:

   determining to send the mapping relationship information to the terminal, in response to the number of paging groups allocated in the predetermined manner being greater than the number of paging groups supported by the base station for the predetermined manner; or determining not to send the mapping relationship information to the terminal, in response to the number of paging groups allocated in the predetermined manner being not greater than the number of paging groups supported by the base station for the predetermined manner.

4. The method according to claim 2, further comprising: sending number information to the terminal, wherein the number information indicates: the number of paging groups supported by the base station for the predetermined manner.

5. The method according to claim 4, wherein sending the number information to the terminal comprises:

   sending first number information to the terminal, wherein the first number information carries a value of the number of paging groups supported by the base station for the predetermined manner; or sending second number information to the terminal, wherein the second number information carries an indication which enables the terminal to determine the number of paging groups supported by the base station for the predetermined manner according to a number obtained in a target manner.

6. The method according to claim 4, wherein the number of paging groups supported by the base station for the predetermined manner is a number determined according to a predetermined protocol or a total number of paging groups supported by the base station.

7. The method according to claim 4, wherein the number information indicates that the base station supports the manner that the network allocates paging groups.

8. The method according to claim 1, further comprising: establishing the mapping relationship between the information of the paging group and the paging group resource.

9. The method according to claim 8, wherein establishing the mapping relationship between the information of the paging group and the paging group resource comprises:

   establishing a mapping relationship between a single paging group and a resource set including at least one paging group resource; or establishing a mapping relationship between a group set including multiple paging groups and a resource set including at least one paging group resource.

10. A method for group paging, performed by a terminal, comprising:

    receiving mapping relationship information sent by a base station; wherein the mapping relationship information indicates a mapping relationship between information of a paging group and a paging group resource.

11. The method according to claim 10, further comprising:

    receiving number information sent by the base station; wherein the number information indicates: a number of paging groups supported by the base station for a predetermined manner; and the predetermined manner is a manner that a network allocates paging groups.

12. The method according to claim 11, wherein receiving the number information sent by the base station comprises:

    receiving first number information sent by the base station, wherein the first number information carries a value of the number of paging groups supported by the base station for the predetermined manner; or receiving second number information sent by the base station, wherein the second number information carries an indication which enables the terminal to determine the number of paging groups supported by the base station for the predetermined manner according to a number obtained in a target manner.

**13.** The method according to claim 11, wherein the number of paging groups supported by the base station for the predetermined manner is a number determined according to a predetermined protocol or a total number of paging groups supported by the base station.

**14.** The method according to claim 11, wherein the number information indicates that the base station supports the manner that the network allocates paging groups.

**15.** The method according to claim 11, wherein the mapping relationship comprises:

a mapping relationship between a single paging group and a resource set including at least one paging group resource; or
a mapping relationship between a group set including multiple paging groups and a resource set including at least one paging group resource.

**16.** The method according to claim 11, further comprising:

determining a paging group resource to be used by the terminal for paging according to a paging group to which the terminal belongs and the mapping relationship indicated by the mapping relationship information; or
determining a paging group resource to be used by the terminal for paging according to a paging group to which the terminal belongs and a predetermined mapping relationship, wherein the predetermined mapping relationship is preconfigured; or
determining a paging group resource to be used by the terminal for paging according to a paging group to which the terminal belongs, the mapping relationship indicated by the mapping relationship information, and/or a predetermined mapping relationship.

**17.** The method according to claim 16, wherein the predetermined mapping relationship comprises:

a mapping relationship between a paging group and a paging group resource determined according to an arrangement order of information of the paging group and an arrangement order of the paging group resource; or
a mapping relationship between information of a paging group and a paging group resource determined according to a random selection manner.

**18.** The method according to claim 16, wherein determining the paging group resource to be used by the terminal for paging according to the paging group to which the terminal belongs, the mapping relationship indicated by the mapping relationship information, and the predetermined mapping relationship comprises:

determining the paging group resource to be used by the terminal for paging according to the paging group to which the terminal belongs, the mapping relationship indicated by the mapping relationship information, and the predetermined mapping relationship, in response to a number of paging groups allocated in a predetermined manner being greater than the number of paging groups supported by the base station for the predetermined manner.

**19.** The method according to claim 10, further comprising:

performing a paging operation using a predetermined paging group resource, in response to a number of paging groups allocated in a predetermined manner being greater than the number of paging groups supported by the base station for the predetermined manner, wherein the predetermined paging group resource is preconfigured; or
not using a group paging manner to perform a paging operation, in response to a number of paging groups allocated in a predetermined manner being greater than the number of paging groups supported by the base station for the predetermined manner.

**20.** An apparatus for group paging, comprising:

a sending module, configured to send mapping relationship information to a terminal;
wherein the mapping relationship information indicates a mapping relationship between information of a paging group and a paging group resource.

**21.** An apparatus for group paging, comprising:

a receiving module, configured to receive mapping relationship information sent by a base station;
wherein the mapping relationship information indicates a mapping relationship between information of a paging group and a paging group resource.

**22.** A communication device, comprising:

a memory; and
a processor, connected to the memory, and configured to perform the method according to any one of claims 1 to 9 or claims 10 to 19 by executing computer-executable instructions stored in the memory.

**23.** A computer storage medium, having stored therein computer-executable instructions that, when executed by a processor, cause the method according to any one of claims 1 to 9 or claims 10 to 19 to be performed.

FIG. 1

| terminal | | base station |

Step 21, sending mapping relationship information to a terminal; wherein the mapping relationship information indicates a mapping relationship between information of a paging group and a paging group resource

FIG. 2

terminal

base station

Step 31, determining to send the mapping relationship information to the terminal, in response to the number of paging groups allocated in the predetermined manner being greater than the number of paging groups supported by the base station for the predetermined manner; or determining not to send the mapping relationship information to the terminal, in response to the number of paging groups allocated in the predetermined manner being not greater than the number of paging groups supported by the base station for the predetermined manner

wireless communication

**FIG. 3**

terminal

base station

Step 41, sending number information to the terminal, wherein the number information indicates: the number of paging groups supported by the base station for the predetermined manner

**FIG. 4**

terminal

base station

Step 51, sending first number information to the terminal, wherein the first number information carries a value of the number of paging groups supported by the base station for the predetermined manner; or sending second number information to the terminal, wherein the second number information carries an indication which enables the terminal to determine the number of paging groups supported by the base station for the predetermined manner according to a number obtained in a target manner

**FIG. 5**

terminal | base station

Step 61, establishing the mapping relationship between the information of the paging group and the paging group resource

wireless communication

FIG. 6

terminal | base station

Step 71, establishing a mapping relationship between a single paging group and a resource set including at least one paging group resource; or establishing a mapping relationship between a group set including multiple paging groups and a resource set including at least one paging group resource

wireless communication

FIG. 7

terminal | base station

Step 81, receiving mapping relationship information sent by a base station; wherein the mapping relationship information indicates a mapping relationship between information of a paging group and a paging group resource

FIG. 8

base station          terminal

Step 91, receiving number information sent by the base station; wherein the number information indicates: a number of paging groups supported by the base station for a predetermined manner

FIG. 9

terminal          base station

Step 101, receiving first number information sent by the base station, wherein the first number information carries a value of the number of paging groups supported by the base station for the predetermined manner; or receiving second number information sent by the base station, wherein the second number information carries an indication which enables the terminal to determine the number of paging groups supported by the base station for the predetermined manner according to a number obtained in a target manner

FIG. 10

terminal          base station

Step 111, determining a paging group resource to be used by the terminal for paging according to a paging group to which the terminal belongs and the mapping relationship indicated by the mapping relationship information; or determining a paging group resource to be used by the terminal for paging according to a paging group to which the terminal belongs and a predetermined mapping relationship, wherein the predetermined mapping relationship is preconfigured; or determining a paging group resource to be used by the terminal for paging according to a paging group to which the terminal belongs, the mapping relationship indicated by the mapping relationship information, and a predetermined mapping relationship

wireless communication

FIG. 11

| terminal | | base station |

Step 121, determining the paging group resource to be used by the terminal for paging according to the paging group to which the terminal belongs, the mapping relationship indicated by the mapping relationship information, and the predetermined mapping relationship, in response to a number of paging groups allocated in a predetermined manner being greater than the number of paging groups supported by the base station for the predetermined manner

wireless communication

FIG. 12

| terminal | | base station |

Step 131, performing a paging operation using a predetermined paging group resource, in response to a number of paging groups allocated in a predetermined manner being greater than the number of paging groups supported by the base station for the predetermined manner, wherein the predetermined paging group resource is preconfigured; or not using a group paging manner to perform a paging operation, in response to a number of paging groups allocated in a predetermined manner being greater than the number of paging groups supported by the base station for the predetermined manner

wireless communication

FIG. 13

apparatus for group paging

sending module ⟋ 141

FIG. 14

apparatus for group paging

receiving module ⟋ 151

FIG. 15

804 802 800

Memory

Processing
Component

Communication
Component

816

806

Power
Component

Processor

820

808

Multimedia
Component

814

Sensor
Component

810

Audio
Component

I/O Interface

812

FIG. 16

900

922

Processing
Component

Power
Component

926

932

Memory

Network
Interface(s)

950

I/O Interface

958

FIG. 17

## INTERNATIONAL SEARCH REPORT

| | International application No. |
| --- | --- |
| | **PCT/CN2021/134688** |

**A. CLASSIFICATION OF SUBJECT MATTER**

H04W 68/00(2009.01)i; H04W 68/02(2009.01)i

According to International Patent Classification (IPC) or to both national classification and IPC

**B. FIELDS SEARCHED**

Minimum documentation searched (classification system followed by classification symbols)

H04L; H04W

Documentation searched other than minimum documentation to the extent that such documents are included in the fields searched

Electronic data base consulted during the international search (name of data base and, where practicable, search terms used)

WPABSC; CNTXT; CNKI; 3GPP; VEN; ENTXT: 分组, 寻呼, 基站, 终端, 用户, 映射, 资源, 数量, packet, pag+, base w station, BS, terminal, UE, map, resource, number

**C. DOCUMENTS CONSIDERED TO BE RELEVANT**

| Category* | Citation of document, with indication, where appropriate, of the relevant passages | Relevant to claim No. |
| --- | --- | --- |
| X | CN 108271215 A (ZTE CORP.) 10 July 2018 (2018-07-10) <br> description, paragraphs [0006]-[0463] | 1-23 |
| X | CN 110169156 A (QUALCOMM INC.) 23 August 2019 (2019-08-23) <br> description, paragraphs [0006]-[0167] | 1-23 |
| A | CN 110062461 A (HUAWEI TECHNOLOGIES CO., LTD.) 26 July 2019 (2019-07-26) <br> entire document | 1-23 |
| A | US 2016374048 A1 (QUALCOMM INC.) 22 December 2016 (2016-12-22) <br> entire document | 1-23 |
| A | VIVO. ""Sub-grouping procedure for paging enhancement"" <br> *3GPP TSG-RAN WG2 Meeting #116-e R2-2109737*, 22 October 2021 (2021-10-22), <br> entire document | 1-23 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **01 July 2022** | **11 August 2022** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

### INTERNATIONAL SEARCH REPORT
Information on patent family members

| International application No. |
| --- |
| **PCT/CN2021/134688** |

| Patent document cited in search report | | | Publication date (day/month/year) | Patent family member(s) | | | Publication date (day/month/year) |
| --- | --- | --- | --- | --- | --- | --- | --- |
| CN | 108271215 | A | 10 July 2018 | None | | | |
| CN | 110169156 | A | 23 August 2019 | WO | 2018128933 | A1 | 12 July 2018 |
| | | | | US | 2018199310 | A1 | 12 July 2018 |
| | | | | EP | 3566511 | A1 | 13 November 2019 |
| | | | | TW | 201831015 | A | 16 August 2018 |
| CN | 110062461 | A | 26 July 2019 | WO | 2019141123 | A1 | 25 July 2019 |
| US | 2016374048 | A1 | 22 December 2016 | WO | 2016204985 | A1 | 22 December 2016 |
| | | | | JP | 2018518117 | A | 05 July 2018 |
| | | | | EP | 3311594 | A1 | 25 April 2018 |
| | | | | KR | 20180019584 | A | 26 February 2018 |
| | | | | CN | 107743716 | A | 27 February 2018 |